# EUROPÄISCHE PATENTANMELDUNG

(11) **EP 3 667 258 A1**
(43) Veröffentlichungstag der Anmeldung: **17.06.2020**
(21) Anmeldenummer: 19212231.5
(22) Anmeldetag: 28.11.2019
(51) Int. Cl.: G01F 1/66

(54) **MESSEINRICHTUNG ZUR ERMITTLUNG EINER FLUIDGRÖSSE**

(30) Priorität: 12.12.2018 DE 102018009754
(71) Anmelder: Diehl Metering GmbH, 91522 Ansbach (DE)
(72) Erfinder: Benkert, Andreas, 91522 Ansbach (DE); Sturm, Thomas, 91623 Sachsen (DE); Mayle, Michael, 91522 Ansbach (DE); Ploß, Peter, 95445 Bayreuth (DE)
(74) Vertreter: Diehl Patentabteilung

(57) **Zusammenfassung**

Messeinrichtung zur Ermittlung einer Fluidgröße mit einer Steuereinrichtung (2), einem Messrohr (3), das dazu dient, das Fluid aufzunehmen und/oder zu führen, und einem an dem Messrohr (3) angeordneten, ersten Schwingungswandler (5), wobei der erste Schwingungswandler (5) eine ortsfest bezüglich des Messrohrs angeordnete Haltevorrichtung (26) und wenigstens zwei voneinander beabstandete Schwingelemente (17, 18) umfasst, wobei zwischen eine jeweilige von dem Messrohr (3) abgewandte Seitenfläche (31) der Schwingelemente (17, 18) und die Haltevorrichtung (26) wenigstens ein oder wenigstens ein jeweiliges elastisch verformtes Federelement (30, 37, 41, 42, 45, 46, 50, 51) geklemmt ist, welches das jeweilige Schwingelement (17, 18) gegen das Messrohr (3) oder ein zwischen dem Messrohr (3) und dem jeweiligen Schwingelement (17, 18) angeordnetes Kopplungselement (16) presst, wobei die Steuereinrichtung (2) dazu eingerichtet ist, die Schwingelemente (17, 18) derart anzusteuern, dass sie gemeinsam eine in einer Seitenwand (9) des Messrohrs (3) geführte Welle anregen, die direkt in der Seitenwand (9) oder indirekt über das Fluid zu einem an dem Messrohr (3) angeordneten zweiten Schwingungswandler (6) oder zurück zu dem ersten Schwingungswandler (5) führbar ist, um dort durch die Steuereinrichtung (2) zur Ermittlung von Messdaten erfasst zu werden, wobei die Steuereinrichtung dazu eingerichtet ist, die Fluidgröße in Abhängigkeit der Messdaten zu ermitteln.

## Beschreibung

Die Erfindung betrifft eine Messeinrichtung zur Ermittlung einer ein Fluid und/oder eine Fluidströmung des Fluids betreffenden Fluidgröße mit einer Steuereinrichtung, einem Messrohr, das dazu dient, das Fluid aufzunehmen und/oder zu führen, und einem an dem Messrohr angeordneten, ersten Schwingungswandler.

Eine Möglichkeit einen Durchfluss oder andere ein Fluid betreffende Messgrößen zu erfassen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern beziehungsweise aus einem Laufzeitunterschied bei einer Vertauschung von Sender und Empfänger kann eine Durchflussgeschwindigkeit durch das Messrohr bestimmt werden.

Aus dem Artikel G. Lindner, "Sensors and actuators based on surface acoustic waves propagating along solid-liquid interfaces", J. Phys. D: Appl. Phys. 41 (2008) 123002, ist es bekannt, zur Anregung von geführten Wellen sogenannte Interdigitaltransducer zu nutzen, bei denen ein piezoelektrisches Element genutzt wird, das kammartig ineinandergreifende Steuerleitungen aufweist, um eine Anregung bestimmter Anregungsmoden geführter Wellen zu erreichen. Da notwendigerweise Scher-Moden des piezoelektrischen Elements angeregt werden, werden typischerweise keine hohen Wirkungsgrade der Anregung erreicht. Zudem ist eine relativ aufwendige, hochgenaue Lithographie erforderlich, um die erforderliche Elektrodenstruktur mit ausreichender Exaktheit aufzubringen, wobei häufig dennoch keine ausreichende Modenreinheit der Anregung erreicht wird.

Eine Anregung einer modenreinen geführten Welle ist jedoch für eine Nutzung in einem Ultraschallzähler hochrelevant, da der Winkel, in dem Kompressionsschwingungen in das Fluid abgestrahlt werden, von der Phasengeschwindigkeit der geführten Welle abhängt, die typischerweise in unterschiedlichen Anregungsmoden bei gleicher angeregter Frequenz unterschiedlich ist. Werden verschiedene Moden angeregt, so resultieren verschiedene Ausbreitungspfade für die Kompressionsschwingungen im Fluid, die allenfalls durch eine aufwendige Signalauswertung herausgerechnet werden können.

Der Erfindung liegt daher die Aufgabe zugrunde, eine Messeinrichtung anzugeben, die geführte Wellen zur Messung nutzt, wobei ein geringer Bauraumbedarf und ein einfacher Aufbau der genutzten Messeinrichtung realisiert werden soll.

Die Aufgabe wird erfindungsgemäß durch eine Messeinrichtung der eingangs genannten Art gelöst, wobei der erste Schwingungswandler eine ortsfest bezüglich des Messrohrs angeordnete Haltevorrichtung und wenigstens zwei voneinander beabstandete Schwingelemente umfasst, wobei zwischen eine jeweilige von dem Messrohr abgewandte Seitenfläche der Schwingelemente und die Haltevorrichtung wenigstens ein oder wenigstens ein jeweiliges elastisch verformtes Federelement geklemmt ist, welches das jeweilige Schwingelement gegen das Messrohr oder ein zwischen dem Messrohr und dem jeweiligen Schwingelement angeordnetes Kopplungselement presst, wobei die Steuereinrichtung dazu eingerichtet ist, die Schwingelemente derart anzusteuern, dass sie gemeinsam eine in einer Seitenwand des Messrohrs geführte Welle anregen, die direkt in der Seitenwand oder indirekt über das Fluid zu einem an dem Messrohr angeordneten zweiten Schwingungswandler oder zurück zu dem ersten Schwingungswandler führbar ist, um dort durch die Steuereinrichtung zur Ermittlung von Messdaten erfasst zu werden, wobei die Steuereinrichtung dazu eingerichtet ist, die Fluidgröße in Abhängigkeit der Messdaten zu ermitteln.

Es wird vorgeschlagen, eine Wand eines Messrohrs durch mehrere voneinander beabstandete Schwingelemente und somit in beabstandeten Anregungsbereichen anzuregen. Durch eine Überlagerung der erzeugten Teilwellen wird eine Gesamtwelle erzeugt, die anschließend zur Messung genutzt werden kann. Hierbei können die geometrische Anordnung der Schwingelemente bzw. der Anregungsbereiche und die Parameter der Schwingungsanregung, also insbesondere eine genutzte Frequenz und eine Polarität und/oder Phasenlage, die zum Betrieb der einzelnen Schwingelemente genutzt wird, derart aufeinander abgestimmt werden, dass eine zu dämpfende Schwingungsmode durch eine destruktive Interferenz zumindest für eine Ausbreitungsrichtung bedämpft oder im Wesentlichen vollständig ausgelöscht wird. Hierdurch kann eine hohe Modenreinheit der Anregung erreicht werden, indem gezielt eine nicht gewünschte Schwingungsmode bedämpft wird.

Bei Nutzung dieses Anregungsprinzips ist es jedoch hochrelevant, dass die Schwingelemente korrekt zueinander positioniert werden. Hierzu wird in der erfindungsgemäßen Messeinrichtung eine Haltevorrichtung genutzt, wobei dadurch, dass ein oder ein jeweiliges zwischen der Haltevorrichtung und den Schwingelementen angeordnetes Federelement verwendet wird, jedes der Schwingelemente mit einem definierten Anpressdruck gegen die Seitenwand des Messrohrs bzw. ein zwischen dem Schwingelement und dem Messrohr angeordnetes Kopplungselement gepresst wird. Durch eine derartige Halterung der Schwingelemente am Messrohr werden eine Vielzahl von Vorteilen erreicht. Zum einen können produktionsbedingte Toleranzen ausgeglichen werden, da durch die Lagerung über wenigstens ein Federelement trotz typischerweise nie vollständig vermeidbarer Produktionstoleranzen einerseits sichergestellt wird, dass das Schwingelement in gutem Kontakt zum Messrohr bzw. zum Kopplungselement ist, und andererseits vermieden wird, dass zu große Kräfte auf das Schwingelement wirken, die beispielsweise ein piezokeramisches Schwingelement zerstören könnten. Neben Toleranzen, die die rein geometrischen Bemaßungen der Messeinrichtung betreffen, können durch dieses Vorgehen auch Unebenheiten der Seitenwand, der Schwingelemente und/oder der Haltevorrichtung ausgeglichen werden. Zudem wird verhindert, dass die Piezoelemente sich bei der Montage der Messeinrichtung gegen das Messrohr verkanten und somit ein nicht planer Kontakt zwischen diesen Komponenten resultiert. Zudem wird, wie bereits erwähnt, eine definierte Positionierung der einzelnen Elemente und eine definierte Anpresskraft mit geringem technischem Aufwand erreicht. Die Lagerung über wenigstens ein Federelement kann zudem eine akustische Bedämpfung bewirken, die sich einerseits positiv auf das Schwingungsverhalten der Schwingelemente auswirken kann, da schmalbandige Resonanzspitzen und Nachschwingneigungen reduziert werden. Andererseits wird eine Einkopplung von Schwingungen in die Haltevorrichtung, also beispielsweise in ein Wandlergehäuse, reduziert.

Die Haltevorrichtung kann insbesondere als Gehäuse ausgebildet sein, das gemeinsam mit dem Messrohr oder dem Kopplungselement, beispielsweise wie später noch im Detail erläutert wird, mit einer Schwingplatte oder Schwingfolie, die Schwingelemente allseitig umgibt. Hierdurch können die Schwingelemente von Umwelteinflüssen geschützt werden, beispielsweise indem ein flüssigkeitsdichtes oder zumindest spritzwasserdichtes Gehäuse genutzt wird.

Die Nutzung von zwei oder mehr Schwingelementen, die eine Anregung in separaten Anregungsbereichen durchführen, ist vorteilhaft, da bei Anregung einer geführten Lamb-Welle in der Seitenwand des Messrohrs bei einer bestimmten Anregungsfrequenz stets wenigstens zwei Moden angeregt werden können. Durch Wahl einer geeigneten Anregungsfrequenz kann erreicht werden, dass genau zwei Schwingungsmoden angeregt werden können, nämlich eine asymmetrische und eine symmetrische Lamb-Welle. Da diese Schwingungsmoden unterschiedliche Phasengeschwindigkeiten aufweisen, haben sie auch unterschiedliche Wellenlängen, so dass durch eine entsprechende Wahl der Abstände der Anregungsbereiche und eine entsprechende Verzögerung der genutzten Anregungssignale für eines der Schwingelemente bzw. durch Wahl einer entsprechenden Phasenlage und/oder Polarität der Anregungen gezielt eine im Wesentlichen vollständig destruktive Interferenz der nicht gewünschten Mode und somit eine modenreine Anregung erreicht werden kann.

Durch das erfindungsgemäße Verfahren können Messungen an einer durch das Messrohr strömenden Fluidströmung, jedoch auch an einem in dem Messrohr stehenden Fluid durchgeführt werden. Die Nutzung eines Schwingungstransports zur Erfassung von Fluideigenschaften ist prinzipiell im Stand der Technik bekannt. Beispielsweise werden in Ultraschallzählern häufig Laufzeitunterschiede einer Laufzeit einer Schwingung zwischen einem ersten und einem zweiten Ultraschallwandler und umgekehrt erfasst und hieraus kann eine Flussgeschwindigkeit bestimmt werden. Es können jedoch auch andere Messdaten ausgewertet werden, um Fluideigenschaften zu bestimmen. Beispielsweise kann eine Signalamplitude am empfangenden Schwingungswandler ausgewertet werden, um eine Dämpfung der Schwingung beim Transport durch das Fluid zu erfassen. Amplituden können auch frequenzabhängig ausgewertet werden und es können absolute oder relative Amplituden bestimmter Spektralbereiche ausgewertet werden, um ein spektral unterschiedliches Dämpfungsverhalten im Fluid zu erfassen. Auch Phasenlagen unterschiedlicher Frequenzbänder können ausgewertet werden, um beispielsweise Informationen über das Dispersionsverhalten der Messstrecke zu gewinnen. Vorzugsweise können Informationen über das Dispersionsverhalten der Druckwelle im Fluid und/oder über das Dispersionsverhalten der Lamb-Welle in der Wand ermittelt werden. Alternativ oder ergänzend können auch Veränderungen der spektralen Zusammensetzung bzw. der Amplitude über die Zeit, beispielsweise innerhalb eines Messpulses, ausgewertet werden.

Durch Auswertung dieser Größen können als Fluidgrößen beispielsweise eine Durchflussgeschwindigkeit und/oder ein Durchflussvolumen und/oder eine Dichte, Temperatur und/oder Viskosität des Fluids ermittelt werden. Ergänzend oder alternativ können beispielsweise eine Schallgeschwindigkeit im Fluid und/oder eine Zusammensetzung des Fluids, beispielsweise ein Mischungsverhältnis unterschiedlicher Komponenten, ermittelt werden. Verschiedene Ansätze zur Gewinnung dieser Fluidgrößen aus den vorangehend erläuterten Messgrößen sind im Stand der Technik bekannt und sollen daher nicht detailliert dargestellt werden. Beispielsweise können Zusammenhänge zwischen einer oder mehreren Messgrößen und der Fluidgröße empirisch ermittelt werden und es kann beispielsweise eine Look-Up-Tabelle oder eine entsprechende Formel genutzt werden, um die Fluidgröße zu ermitteln.

Das Federelement kann insbesondere zwischen die messrohrabgewandte Seitenfläche des jeweiligen Schwingelements und eine hierzu parallele Fläche der Haltevorrichtung geklemmt sein. Das Schwingelement kann beispielsweise die Form eines langgestreckten Quaders aufweisen, wobei sich die längste Seite des Schwingelements senkrecht zu einer gewünschten Ausbreitungsrichtung der geführten Welle, beispielsweise in Querrichtung des Messrohrs, erstrecken kann. Die beiden Schwingelemente können parallel zueinander in einem bestimmten Abstand in Ausbreitungsrichtung der geführten Welle angeordnet sein. Wird in der Messeinrichtung eine feste Frequenz zur Anregung der Schwingelemente genutzt, kann beispielsweise ein Abstand verwendet werden, der der Wellenlänge oder der halben Wellenlänge einer zu bedämpfenden Schwingungsmode entspricht. Bei einem Abstand von einer halben Wellenlänge erfolgt eine Bedämpfung bei einem Betrieb der Schwingelemente mit gleicher Polarität und bei einem Abstand von einer ganzen Wellenlänge bei einem Betrieb mit unterschiedlicher Polarität.

Wenigstens eines der Schwingelemente kann einen Schwingkörper, eine messrohrseitige Elektrode, die an einer messrohrseitigen Seitenfläche des jeweiligen Schwingkörpers angeordnet ist, und eine messrohrabgewandte Elektrode, die an einer der messrohrseitigen Seitenfläche gegenüberliegenden, messrohrabgewandten Seitenfläche des Schwingkörpers angeordnet ist, umfassen, wobei sich die messrohrseitige Elektrode auf eine weitere Seitenfläche des Schwingkörpers erstreckt, die gewinkelt zu der messrohrseitigen und der messrohrabgewandten Seitenfläche steht, wobei die Steuereinrichtung dazu eingerichtet ist, eine Spannung zwischen der messrohrseitigen und der messrohrabgewandten Elektrode zu variieren, um den Schwingkörper zu Schwingungen anzuregen. Durch das Führen der messrohrseitigen Elektrode auf eine weitere Seitenfläche wird die Kontaktierung dieser Elektrode erheblich vereinfacht.

Bevorzugt erstreckt sich auch die messrohrabgewandte Elektrode auf eine weitere Seitenfläche, die gewinkelt zu der messrohrseitigen und der messrohrabgewandten Seitenfläche steht, insbesondere auf eine Seitenfläche, die jener Seitenfläche, auf die sich die messrohrseitige Elektrode erstreckt, gegenüberliegt. Die Seitenflächen, auf die sich die Elektroden erstrecken, können beispielsweise die beiden Seitenflächen in Querrichtung des Messrohrs sein. Im Rahmen der Erfindung wurde festgestellt, dass eine asymmetrische Elektrodenstruktur, bei der ausschließlich eine der Elektroden teilweise um den Schwingkörper herumgeführt ist, die Eigenmoden des Schwingelements auf eine Weise beeinflusst, die bei einer möglichst modenreinen gewünschten Anregung von geführten Wellen hinderlich sein kann. Aus einer asymmetrischen Anordnung der Elektroden resultiert einerseits eine Asymmetrie der mechanischen Eigenschaften des Schwingelements und andererseits eine asymmetrische Feldverteilung im Schwingkörper beim Anlegen einer Spannung an die Elektroden. Es wurde erkannt, dass selbst in dem Fall, wenn im Wesentlichen ebene geführte Wellen senkrecht zu jener Richtung angeregt werden, in der diese Asymmetrie auftritt, eine solche Asymmetrie eine modenreine Anregung verhindern oder zumindest erschweren kann. Es wurde jedoch erkannt, dass eine solche Asymmetrie dadurch behoben werden kann, dass sich auch die messrohrabgewandte Elektrode auf eine weitere Seitenfläche des Schwingkörpers erstreckt. Hierdurch kann die Symmetrie der Elektroden und somit die Symmetrie des gesamten Schwingelements erhöht werden, was zur Anregung von modenreinen Schwingungen vorteilhaft ist.

Der Schwingkörper kann aus einem piezoelektrischen Material, beispielsweise aus Piezokeramik, bestehen und insbesondere quaderförmig sein.

Die messrohrseitige Elektrode kann sich über die weitere Seitenfläche bis auf die messrohrabgewandte Seitenfläche erstrecken. Wie obig erläutert ist es vorteilhaft, wenn eine symmetrische Elektrodenanordnung genutzt wird, so dass ergänzend vorgesehen sein kann, dass sich die messrohrabgewandte Elektrode über die entsprechende weitere Seitenfläche bis auf die messrohrzugewandte Seitenfläche erstreckt. Eine derartige Gestaltung der Messeinrichtung weist mehrere Vorteile auf. Einerseits resultieren in den Randbereichen, in denen sowohl auf der messrohrabgewandten Seitenfläche als auch auf der messrohrzugewandten Seitenfläche die gleiche Elektrode angeordnet ist, Bereiche des Schwingkörpers, die auch bei einem Anlegen von Spannung näherungsweise feldfrei sind, womit in diesen Bereichen nur geringe Schwingungsamplituden auftreten. Somit sind diese Bereiche sehr gut zur Halterung und/oder zur Kontaktierung der Schwingelemente geeignet. Andererseits wird durch diese Elektrodenanordnung ermöglicht, dass beide Elektroden an der messrohrabgewandten Seitenfläche kontaktiert werden können, was eine Kontaktierung weiter erleichtern kann, insbesondere, wenn, wie später noch genauer erläutert werden wird, Federelemente zur Kontaktierung genutzt werden.

Es ist möglich, dass zwischen einem jeweiligen Schwingelement und der Haltevorrichtung zwei oder mehr Federelemente angeordnet sind, die die von dem Messrohr abgewandten Seitenfläche des jeweiligen Schwingelements in einem jeweiligen Kontaktbereich mit der messrohrabgewandten Seitenfläche mechanisch kontaktieren. Dies kann vorteilhaft sein, wenn die Federelemente zur Kontaktierung der Elektroden dienen sollen und/oder wenn die Lagerung auf das konkrete Schwingverhalten des Schwingelements abgestimmt werden soll, wie später noch erläutert werden wird.

Die messrohrabgewandte und/oder die messrohrseitige Elektrode können durch ein jeweiliges Federelement, das elektrisch leitend ist, elektrisch kontaktiert sein. Beispielsweise kann als leitendes Federelement eine Metallfeder oder ein leitender Kunststoff verwendet werden. Das Federelement kann das Schwingelement in einem Bereich mechanisch kontaktieren, in dem auch die entsprechende Elektrode angeordnet ist, wodurch auch ein elektrischer Kontakt resultiert. Über eine solche Kontaktierung ist eine Spannungsbeaufschlagung durch die Steuereinrichtung zur Anregung von Schwingungen möglich. Es ist auch möglich, eine der Elektroden über eine solche Kontaktierung mit einem Referenzpotential, beispielsweise einem Erdpotential, zu verbinden. Eine Kontaktierung über leitende Federelemente erfolgt vorzugsweise im Bereich der messrohrabgewandten Seitenfläche des Schwingelements. Alternativ hierzu wäre es beispielsweise möglich, separate Kontaktelemente zu nutzen, die beispielsweise stirnseitig an das Schwingelement angreifen können.

Unter einem elektrisch leitenden Federelement wird insbesondere ein Federelement verstanden, das ausreichend gut leitet, dass eine Spannungsbeaufschlagung der Elektroden zur Schwingungsanregung über das Federelement möglich ist. Beispielsweise kann das Federelement einen Gesamtwidersand von weniger als 100 Ω aufweisen bzw. aus einem Material bestehen, das einen spezifischen Widerstand von weniger als 0,1 Ω/m, insbesondere von weniger als 10⁻³ Ω/m oder von weniger als 10⁻⁴ Ω/m aufweist.

Wenigstens eines der Federelemente kann genau eine Elektrode genau eines der Schwingelemente elektrisch kontaktieren. Alternativ hierzu wäre es beispielsweise möglich, dass ein Federelement eine jeweilige Elektrode beider Schwingelemente kontaktiert. Dies kann zwar vorteilhaft sein, um eine jeweilige Elektrode beider Schwingelemente auf ein definiertes Referenzpotential zu ziehen oder das gleiche Ansteuersignal einer jeweiligen Elektrode beider Schwingelemente zuzuführen. Häufig ist es jedoch vorteilhaft, die Schwingelemente auf unterschiedliche Weise ansteuern zu können. Dies wird dadurch ermöglicht, dass wenigstens eine Elektrode der Schwingelemente für jedes der Schwingelemente separat kontaktiert wird.

Die separate Ansteuerbarkeit der Schwingelemente kann beispielsweise dazu dienen, ein zur Ansteuerung eines ersten der Schwingelemente genutztes Ansteuersignal mit einer vorgegebenen Zeitverzögerung einem weiteren Schwingelement zuzuführen. Wird die Zeitverzögerung beispielsweise derart gewählt, dass sie der Laufzeit einer bestimmten Schwingungsmode entspricht, kann sichergestellt werden, dass das zweite Schwingelement mit der von dem ersten Schwingelement einlaufenden Welle in Phase schwingt bzw. durch eine Umkehrung der Ansteuerpolarität kann erreicht werden, dass es gegenphasig schwingt, womit die entsprechende Schwingungsmode im Wesentlichen vollständig ausgelöscht werden kann. Durch Wahl der Verzögerungszeit kann somit bestimmt werden, welche der durch die einzelnen Schwingelemente angeregten Schwingungsmoden in der Gesamtwelle durch destruktive Interferenz ausgelöscht wird, womit insbesondere dann, wenn die Anregungsfrequenz so gewählt wird, dass nur genau zwei Schwingungsmoden angeregt werden, wahlweise eine modenselektive bzw. im Wesentlichen modenreine Anregung einer Gewählten dieser Moden erfolgen kann.

In einer alternativen Ausführungsform wäre es beispielsweise möglich, die Anregungsfrequenz so zu wählen, dass gemäß der Dispersionsrelation der Seitenwand eine der bei dieser Frequenz anregbaren Moden genau die doppelte Wellenlänge der anderen anregbaren Mode aufweist. Wird nun der Abstand zwischen den Mitten der Anregungsbereiche bzw. den Mitten der Schwingelemente so gewählt, dass er der Wellenlänge der kürzerwelligen dieser Wellen entspricht, so resultiert bei einer synchronen Anregung beider Schwingelemente mit gleicher Polarität im Wesentlichen eine modenreine Anregung der kürzerwelligen Mode und bei einer Anregung mit umgekehrter Polarität im Wesentlichen eine modenreine Anregung der längerwelligen Mode.

Der Schwingkörper kann quaderförmig sein, wobei die messrohrseitige und die messrohrabgewandte Seitenfläche durch eine Längsrichtung und eine Querrichtung des Quaders aufgespannt werden, wobei der Schwingkörper in Querrichtung an einem ersten Rand einem ersten Randbereich und an einem gegenüberliegenden zweiten Rand einen zweiten Randbereich aufweist, wobei in dem ersten Randbereich sowohl an der messrohrseitigen Seitenfläche als auch an der messrohrabgewandten Seitenfläche ausschließlich die messrohrseitige Elektrode angeordnet ist und in dem zweiten Randbereich sowohl an der messrohrseitigen Seitenfläche als auch an der messrohrabgewandten Seitenfläche ausschließlich die messrohrabgewandte Elektrode angeordnet ist, wobei in dem ersten und zweiten Randbereich ein jeweiliges Federelement die von dem Messrohr abgewandte Seitenfläche der Schwingelemente mechanisch kontaktiert. Da in den Randbereichen an beiden Seiten des Schwingkörpers die gleiche Elektrode angeordnet ist, treten in diesen Bereichen auch bei einer zwischen den Elektroden angelegten Spannung nur sehr geringe Feldstärken auf. Wird das Schwingelement somit durch ein Anlegen von Spannungen zu Schwingungen angeregt, resultieren in den Randbereichen nur sehr kleine Schwingungsamplituden. Eine Lagerung des Schwingelements in diesen Bereichen führt somit dazu, dass einerseits die Eigenschwingungen des Schwingelements durch diese Lagerung im Wesentlichen nicht gestört wird und andererseits kaum ein Schwingungseintrag in die Haltevorrichtung, also beispielsweise in ein Messeinrichtungsgehäuse, erfolgt.

Bei der genannten Anordnung der Federelemente kann zudem bei Nutzung von leitfähigen Federelementen eine Kontaktierung beider Elektroden mit geringem Aufwand erreicht werden.

Alternativ kann ein oder ein jeweiliges Federelement die von dem Messrohr abgewandte Seitenfläche des jeweiligen Schwingelements in mehreren beabstandeten Kontaktbereichen kontaktieren, wobei die Kontaktbereiche jeweils im Bereich eines Schwingungsknotens einer Eigenschwingung des jeweiligen Schwingelements angeordnet sind. Hierdurch kann ein Einfluss der Lagerung auf das Schwingverhalten des Schwingelements minimiert werden. Vorzugsweise ist die Steuereinrichtung derart eingerichtet, dass beim Betrieb der Messeinrichtung zur Anregung der geführten Welle eben diese Eigenschwingung des jeweiligen Schwingelements angeregt wird.

Das Federelement oder wenigstens eines der Federelement und/oder die Haltevorrichtung können wenigstens einen Anschlagabschnitt aufweisen, der eines der Schwingelemente an wenigstens einer Seitenfläche des Schwingelements, die gewinkelt zu der von dem Messrohr abgewandten Seitenfläche steht, mechanisch kontaktiert und/oder der eine Bewegung des Schwingelements senkrecht zu dieser Seitenfläche zumindest einseitig begrenzt. Die entsprechende Seitenfläche kann insbesondere eine Seitenfläche sein, an der keine der Elektroden angeordnet ist. Beispielsweise kann der Anschlagabschnitt als Anschlag in jene Richtung dienen, in der die Schwingelemente beabstandet sind bzw. in die eine Ausbreitung der geführten Welle erfolgen soll, also beispielsweise in eine Längsrichtung des Messrohres. Somit kann ein entsprechender Anschlagabschnitt primär dazu dienen, eine korrekte Beabstandung der Schwingelemente beim Aufbau der Messeinrichtung sicherzustellen. Der Anschlag kann beispielsweise weniger als 5 mm, weniger als 1 mm oder weniger als 0,5 mm von der entsprechenden Seitenfläche beabstandet sein oder diese direkt berühren. Vorzugsweise können auf wenigstens zwei gegenüberliegenden Seiten des Schwingelements entsprechende Anschlagabschnitte vorgesehen sein.

Das Federelement oder wenigstens eines der Federelemente kann eine Ausnehmung aufweisen, in die eines der Schwingelemente derart eingelegt ist, dass ein Auflageabschnitt des Federelements an der von dem Messrohr abgewandten Seitenfläche des Schwingelements anliegt und dass wenigstens ein Stützabschnitt, der sich in Richtung zum Messrohr hin über den Auflageabschnitt hinauserstreckt, den Anschlagabschnitt ausbildet. Insbesondere können sich zwei Stützabschnitte eines Federelements an gegenüberliegenden Seiten des Schwingelements über den Auflageabschnitt hinauserstrecken, um beidseitige Anschläge für das Schwingelement zu bilden. Eine robuste Positionierung des Schwingelements kann somit mit sehr geringem Aufwand erreicht werden, beispielsweise durch Einschnitt einer entsprechenden Ausnahme in ein als Federelement dienendes Blech.

Das Federelement kann durch ein Polymer oder ein Elastomer oder ein Metall gebildet sein oder ein Klebstoff sein oder einen Klebstoff umfassen. Beispielsweise können als Federelement Standardbauteile, beispielsweise O-Ringe oder Flachdichtungen aus elastischen Werkstoffen, verwendet werden. Es ist auch möglich, Zuschnitte aus Elastomerbändern oder Dichtungsschnüren als Federelemente zu nutzen. Das Federelement kann flächig unter dem Schwingelement, also im Wesentlichen über die gesamte messrohrabgewandte Seitenfläche hinweg oder nur in Teilbereichen, beispielsweise wie erläutert im Randbereich oder unter Schwingungsknoten, eingelegt werden. Es ist möglich, dass für beide Schwingelemente ein gemeinsames Federelement genutzt wird. Alternativ kann für jedes der Schwingelemente genau ein Federelement genutzt werden oder es können mehrere Federelemente für jedes der Schwingelemente genutzt werden.

Das Federelement kann als separates Bauteil ausgebildet sein. Es ist jedoch auch möglich, dass das Federelement im Rahmen des Aufbaus der Messeinrichtung gemeinsam mit der Haltevorrichtung, also beispielsweise einem Gehäuse, bzw. gemeinsam mit dem einzelnen Schwingelement hergestellt bzw. in einem vorbereiteten Schritt auf diese Komponenten aufgebracht wird. Beispielsweise kann eine Elastomerschicht auf die Haltevorrichtung oder auf das Schwingelement aufgespritzt werden. Es können auch federnde Klebstoffe oder selbstklebende federnde Komponenten, beispielsweise ein Klebeband, vor dem Zusammenfügen der Komponenten auf die Messeinrichtung bzw. die Schwingelemente aufgebracht werden. Durch das Aufbringen des Federelements als Schicht auf das Schwingelement kann auch bereits vor dem Zusammenbau der Messeinrichtung eindeutig eine Sollorientierung des Schwingelements vorgegeben werden. Dies ist insbesondere relevant, wenn das Schwingelement mit einer definierten Polarität an der Haltevorrichtung angebracht werden soll. Beispielsweise kann zur klaren Kennzeichnung eine farbige oder anderweitig optisch leicht erkennbare Schicht als Federelement auf das Schwingelement aufgebracht werden.

Das Federelement kann beispielsweise auch ein metallisches Stanzbiegeteil sein. Hierbei können aufgebogene Laschen als Anschlagbereich genutzt werden, um die Position des Schwingelements festzulegen, und eine federnde Wirkung kann mittels durch Biegen hergestellten Erhebungen an der messrohrabgewandten Seite des Schwingelements realisiert werden. Diese können beispielsweise, wie vorangehend erläutert, im Bereich von Schwingungsknoten angeordnet sein, um ein freies Schwingen des Schwingelements im mittleren Bereich zu erreichen. Über diese Erhebungen kann auch eine elektrische Kontaktierung einer Elektrode jedes Schwingelements erfolgen. Die verbleibende Elektrode kann beispielsweise an einer Seitenfläche, die gewinkelt zu der messrohrabgewandten Seitenfläche steht, kontaktiert werden.

Der erste Schwingungswandler kann eine Schwingmembran oder eine Schwingplatte als Kopplungselement aufweisen, die an der Haltevorrichtung befestigt ist und direkt oder über eine Kopplungsschicht mit dem Messrohr gekoppelt ist, wobei an der von dem Messrohr abgewandten Oberfläche der Schwingmembran oder der Schwingplatte in voneinander beabstandeten Anregungsbereichen ein jeweiliges Schwingelement angeordnet ist, wobei die Schwingelemente gemeinsam durch das oder das jeweilige Federelement und die Schwingmembran oder die Schwingplatte gehaltert sind. Hierdurch werden mehrere Vorteile erreicht. Zum einen wird es ermöglicht, dass die Schwingelemente durch die Haltevorrichtung und die Schwingmembran bzw. Schwingplatte vollständig umschlossen werden, so dass beispielsweise ein Spritzwasserschutz oder sogar eine vollständige Flüssigkeitsdichtigkeit erreicht werden kann. Zudem wird hierdurch ermöglicht, dass der Schwingungswandler separat von dem Messrohr aufgebaut werden kann und nur noch als kompaktes Bauteil an dem Messrohr angeordnet werden muss. Dies kann die Herstellung und/oder Wartung der Messeinrichtung deutlich vereinfachen.

Die Schwingmembran kann beispielsweise durch eine Folie gebildet werden und/oder eine Dicke zwischen 3 µm und 300 µm, insbesondere zwischen 10 µm und 100 µm, aufweisen. Die Schwingmembran bzw. Schwingplatte kann aus Kunststoff und/oder einem elektrisch isolierenden Material bestehen. Hierdurch können beispielsweise Schwingelemente gegenüber einem leitenden Messrohr isoliert werden. Die Schwingmembran oder Schwingplatte kann durch Verkleben oder durch Verschweißen, beispielsweise durch Ultraschallschweißen, oder durch Heißprägen mit der Haltevorrichtung verbunden werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Messeinrichtung,
- Figuren 2 und 3: Detailansichten eines Schwingungswandlers der in Fig. 1 gezeigten Messeinrichtung, und
- Figuren 4 bis 7: Detailansichten weiterer Ausführungsbeispiele einer erfindungsgemäßen Messeinrichtung.

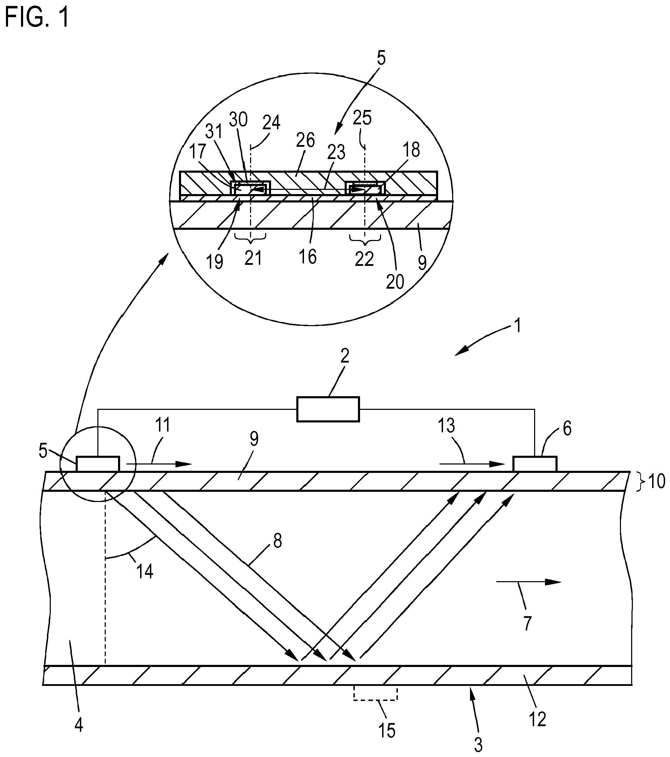

Fig. 1 zeigt eine Messeinrichtung 1 zur Ermittlung einer ein Fluid und/oder eine Fluidströmung betreffenden Fluidgröße. Das Fluid wird hierbei in eine durch den Pfeil 7 gezeigte Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs 3 zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle in der Seitenwand 9 des Messrohrs 3 angeregt. Die Anregung erfolgt mit einer Frequenz, die derart gewählt ist, dass eine Lamb-Welle in der Seitenwand 9 angeregt wird. Solche Wellen können angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle in der Seitenwand 9 an, die schematisch durch den Pfeil 13 dargestellt ist und die durch den Schwingungswandler 6 erfasst werden kann, um die Laufzeit zu bestimmen. Alternativ oder ergänzend ist es möglich, die abgestrahlten Ultraschallwellen über einen Schwingungswandler 15 zu erfassen, der an der Seitenwand 12 angeordnet ist. Im gezeigten Beispiel werden die Ultraschallstrahlen 8 auf ihrem Pfad zum Schwingungswandler 6, 15 nicht bzw. nur einmal an den Seitenwänden 9, 12 reflektiert. Es wäre selbstverständlich möglich, eine längere Messstrecke zu nutzen, wobei die Ultraschallstrahlen 8 mehrfach an den Seitenwänden 9, 12 reflektiert werden.

Bei dem geschilderten Vorgehen kann es problematisch sein, dass die Dispersionsrelation für Lamb-Wellen in der Seitenwand 9 mehrere Zweige aufweist. Bei einer Anregung mit einer bestimmten durch die Steuereinrichtung 2 vorgegebenen Frequenz wäre es somit möglich, dass unterschiedliche Schwingungsmoden für die Lamb-Welle angeregt werden, die unterschiedliche Phasengeschwindigkeiten aufweisen. Dies führt dazu, dass die Kompressionswellen in Abhängigkeit dieser Phasengeschwindigkeiten unter unterschiedlichen Rayleigh-Winkeln 14 abgestrahlt werden. Hieraus resultieren verschiedene Pfade für die Führung der Ultraschallwelle von dem Schwingungswandler 5 zu dem Schwingungswandler 6 und umgekehrt, die typischerweise unterschiedliche Laufzeiten aufweisen. Die empfangenen Signale für diese verschiedenen Ausbreitungspfade müssten somit durch eine aufwendige Signalverarbeitung durch die Steuereinrichtung 2 separiert werden, um die Fluidgröße bestimmen zu können. Dies erfordert einerseits eine aufwendige Steuereinrichtung und ist andererseits nicht in allen Anwendungsfällen robust möglich. Daher soll in dem Schwingungswandler 5 eine möglichst modenreine Anregung von geführten Wellen erfolgen.

Um eine weitgehend modenreine Anregung einer in der Seitenwand 9 geführten Gesamtwelle zu erreichen, wird ein Schwingungswandler 5 genutzt, der mehrere beabstandete Schwingelemente 17, 18 umfasst. Diese werden durch die Steuereinrichtung 2 derart angesteuert, dass sie gemeinsam eine in der Seitenwand 9 des Messrohrs 3 geführte Welle anregen. Hierbei sind die Mitten 24, 25 der Anregungsbereiche 21, 22 mit einem fest vorgegebenen Abstand 23 beabstandet. Dadurch, dass die Anregungsfrequenz derart gewählt wird, dass nur genau zwei Schwingungsmoden einer Lamb-Welle in der Seitenwand 9 angeregt werden können und der Abstand 23 und die Phasenlage bzw. Polarität, mit der die Schwingelemente 17, 18 schwingen, entsprechend gewählt wird, kann eine destruktive Interferenz für eine nicht gewünschte Schwingungsmode sichergestellt werden, so dass eine verbleibende Schwingungsmode im Wesentlichen modenrein angeregt wird.

Für das beschriebene Vorgehen ist eine korrekte Anordnung der Schwingelemente 17, 18 zueinander wesentlich. Die Anordnung der Schwingelemente 17, 18 wird in der Messeinrichtung 1 durch eine Haltevorrichtung 26 festgelegt, die durch nicht gezeigte Befestigungsmittel an dem Messrohr 3 befestigt wird. Diese bildet eine Art Gehäuse für die Schwingelemente 17, 18. Um sicherzustellen, dass die messrohrzugewandten Seitenflächen 19, 20 der Schwingelemente 17, 18 mit einem definierten Anpressdruck auf die Seitenwand 9 des Messrohrs 3 bzw. auf das zwischen den Schwingelementen 17, 18 und der Seitenwand 9 angeordnete Kopplungselement gepresst werden, sind die Schwingelemente 17, 18 nicht direkt an der Haltevorrichtung 26 angebracht, also beispielsweise an dieser verklebt, sondern sie werden über ein jeweiliges Federelement 30 gelagert. Das Federelement ist zwischen die messrohrabgewandte Seitenfläche 31 des jeweiligen Schwingelements 17, 18 und die Haltevorrichtung 26 geklemmt. Es ist im Benutzungszustand der Messeinrichtung, in dem der Schwingungswandler 5 an der Seitenwand 9 angeordnet ist, bereits elastisch verformt bzw. vorgespannt, so dass es eine Kraft auf das jeweilige Schwingelement 17, 18 ausübt.

Auf das in Fig. 1 dargestellte Kopplungselement 16 könnte prinzipiell verzichtet werden. Die Nutzung eines solchen Kopplungselements, beispielsweise einer Folie oder einer dünnen Schwingplatte, bietet jedoch einerseits den Vorteil, dass die Schwingelemente 17, 18 gegen Umwelteinflüsse geschützt sind. Andererseits kann die Haltevorrichtung 26 gemeinsam mit dem Kopplungselement 16 die Schwingelemente 17, 18 haltern, so dass im Rahmen der Herstellung der Messeinrichtung die Schwingungswandler 5, 6 als separate Komponenten aufgebaut und an der Seitenwand 9 angeordnet werden können.

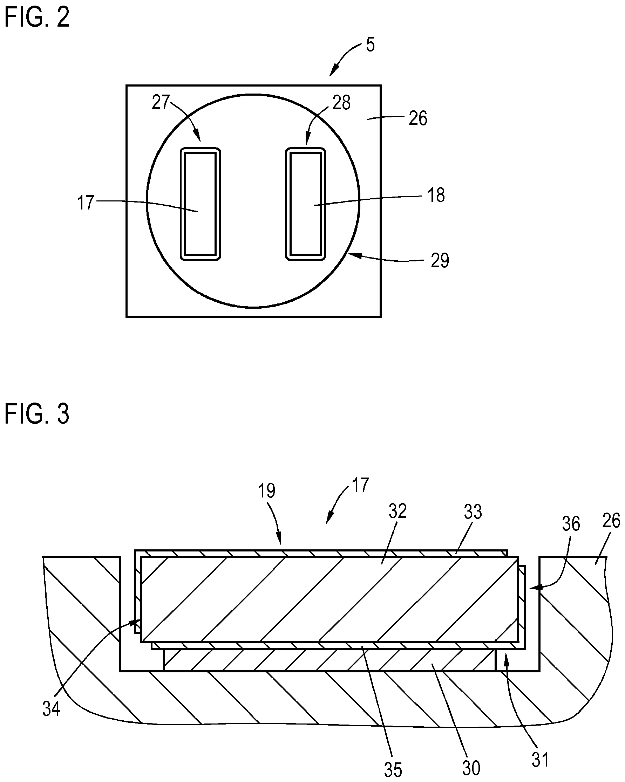

Der Aufbau des Schwingungswandlers 5 sowie Details zur Herstellung des Schwingungswandlers 5 werden im Folgenden mit Bezug auf die Figuren 2 und 3 erläutert. Fig. 2 zeigt eine Ansicht des Schwingungswandlers 5 vor einem Anbringen des Kopplungselements 16 an der Haltevorrichtung 26. Die Haltevorrichtung 26 weist hierbei zwei Ausnehmungen 27, 28 auf, in die die Schwingelemente 17, 18, insbesondere lose, eingelegt sind. Da in diesem Zustand zunächst im Wesentlichen noch keine Kraft auf die messrohrzugewandte Seitenfläche 19 der Schwingelemente 17, 18 wirkt, ist, wie in Fig. 3 dargestellt ist, das Federelement 30 zunächst noch nicht elastisch verformt bzw. vorgespannt, so dass die Schwingelemente 17, 18 zunächst geringfügig über den Rand der Haltevorrichtung 26 hinausragen. Erst mit dem Aufbringen eines ausreichend vorgespannten Kopplungselements 16 bzw. vorzugsweise erst beim Befestigen der Haltevorrichtung an der Seitenwand 9 wird das Federelement 30 so weit komprimiert, dass die Schwingelemente 17, 18 mit definiertem Anpressdruck gegen die Seitenwand 9 bzw. das Kopplungselement 16 gepresst werden und typischerweise hierdurch im Wesentlichen vollständig in der jeweiligen Ausnehmung 27, 28 aufgenommen werden. Das Kopplungselement kann beispielsweise durch Verkleben, durch Verschweißen oder durch Heißprägen mit der Haltevorrichtung 26 verbunden werden. Die Verbindung erfolgt insbesondere ausschließlich randseitig, wie schematisch durch die Verbindungslinie 29 dargestellt ist. Die Schwingelemente 17, 18 können somit durch die Haltevorrichtung 26 und das Kopplungselement 16 gemeinsam vollständig umschlossen werden, wobei sie insbesondere staubdicht und/oder fluiddicht umschlossen sind.

Fig. 3 zeigt zudem detailliert den Aufbau eines einzelnen Schwingelements 17. Das Schwingelement besteht aus einem Schwingkörper 32, einer messrohrseitigen Elektrode 33 und einer messrohrabgewandten Elektrode 35. Sowohl die messrohrseitige Elektrode 33 als auch die messrohrabgewandte Elektrode 35 sind jeweils zu einer weiteren Seitenfläche 34, 36 des Schwingelements bzw. des Schwingkörpers geführt, womit eine leichtere Kontaktierung insbesondere der messrohrseitigen Elektrode 33 ermöglicht wird und dennoch aufgrund der symmetrischen Elektrodenanordnung symmetrische Eigenschwingungen des Schwingelements 17 nicht gestört sind.

Die elektrische Kontaktierung der Elektroden 33, 35 ist in Fig. 3 nicht detailliert dargestellt. Sie kann beispielsweise an den Seitenflächen 34, 36 durch ein Anlöten oder Ankleben mit leitfähigem Kleber von entsprechenden Leitungen erfolgen. Die Elektrode 35 kann auch durch das Federelement 30 kontaktiert werden, beispielsweise wenn das Federelement 30 durch ein leitfähiges Elastomer, einen leitfähigen Klebstoff oder Ähnliches gebildet wird. Durch eine derartige Kontaktierung der Elektrode 35 kann der Herstellungsaufwand zur Herstellung der Messeinrichtung 1 weiter reduziert werden.

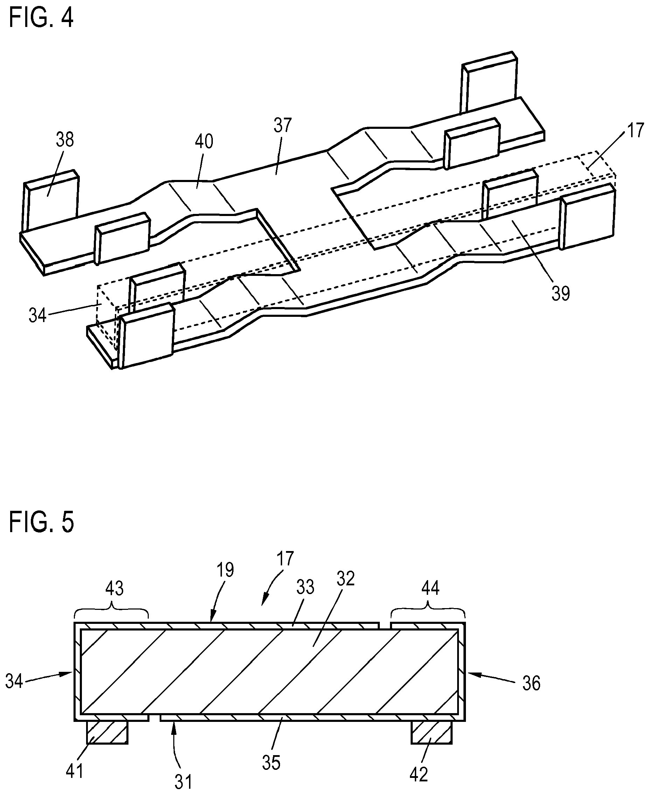

Fig. 4 zeigt eine Möglichkeit, die Schwingelemente 17, 18 über ein gemeinsames Federelement 37 zu lagern. Hierbei wird ein größerer Aufnahmeraum der Haltevorrichtung genutzt, in dem beide Schwingelemente 17, 18 angeordnet werden. Aus Übersichtlichkeitsgründen ist in Fig. 4 nur das Federelement 37 selbst sowie schematisch eines der Schwingelemente 17 dargestellt. Das Federelement 37 ist als ein Metallstanzteil ausgeführt. Durch aufgebogene Laschen werden hierbei Anschlagabschnitte 38 gebildet, die nach einem Einlegen des jeweiligen Schwingelements 17, 18 beispielsweise einen mittleren Abstand von weniger als 1 mm zu den Seitenflächen 39 der Schwingelemente 17 aufweisen. Hierdurch kann zumindest in Richtung des Abstands zwischen den Schwingelementen 17, 18 deren relative Lage und Orientierung mit geringem technischem Aufwand mit hoher Genauigkeit festgelegt werden.

Die federnde Wirkung des Federelements 37 wird durch Erhebungen 40 realisiert, die durch ein entsprechendes Biegen des Stanzbiegeteils hergestellt sind. Diese sind elastisch verformbar. Die Position der Erhebungen 40 ist vorzugsweise so gewählt, dass sie das jeweils getragene Schwingelement 17, 18 in einem Bereich kontaktieren, in dem Schwingungsknoten einer Eigenmode des jeweiligen Schwingelements 17, 18 erwartet werden. Vorzugsweise werden beim Betrieb der Messeinrichtung zur Anregung der geführten Welle die Schwingelemente mit einer Anregungsfrequenz betrieben, bei der sie mit dieser Eigenmode schwingen. Hierdurch wird ein Einfluss der Lagerung auf die Schwingung der Schwingelemente 17, 18 minimiert.

Dadurch, dass ein metallisches Federelement 37 verwendet wird, ist es auch möglich, die messrohrabgewandte Elektrode der Schwingelemente 17, 18 über das Federelement 37 zu kontaktieren. Beispielsweise kann die messrohrabgewandte Elektrode 35 beider Schwingelemente 17, 18 mit einem vorgegebenen Referenzpotential beaufschlagt werden. Die messrohrzugewandte Elektrode 33 kann, wie bereits erläutert, beispielsweise über die Stirnseiten 34 kontaktiert werden. Dies ermöglicht beispielsweise eine unabhängige Ansteuerung der Schwingelemente 17, 18 beispielsweise um eine Polarität der Ansteuerung zu wählen, einen Phasenversatz vorzugeben oder ein Ansteuersignal um eine gewisse Zeit zu verzögern.

Ein besonders einfacher Aufbau der Messeinrichtung ist möglich, wenn beide Elektroden 33, 35 der Schwingelemente 17, 18 über ein jeweiliges Federelement 41, 42 kontaktiert werden, wie dies in Fig. 5 dargestellt ist. Im Gegensatz zu dem in Fig. 3 dargestellten Ausführungsbeispiel ist die messrohrzugewandte Elektrode 33 auf die messrohrabgewandte Seitenfläche 31 gezogen und die messrohrabgewandte Elektrode 35 ist auf die messrohrzugewandte Seitenfläche 19 gezogen. Dies ermöglicht es, bei einer im Wesentlichen symmetrischen Elektrodenanordnung und somit in einer geringfügigen Störung der Eigenschwingungen des Schwingkörpers 32, beide Elektroden über die messrohrabgewandte Seitenfläche 31 zu kontaktieren. Die Kontaktierung erfolgt in Fig. 5 durch leitfähige Federelemente 41, 42, die beispielsweise aus einem leitfähigen Polymer oder Kunststoff gebildet sein können. Die Federelemente 41, 42 kontaktieren die Seitenfläche 31 hierbei ausschließlich in den Randbereichen 43, 44, in denen auf beiden Seitenflächen 19, 31 jeweils die gleiche Elektrode 33 bzw. 35 angeordnet ist. Dies führt dazu, dass auch beim Anliegen einer Spannung zwischen den Elektroden 33, 35 die Feldstärken in den Randbereichen 43, 44 sehr klein sind, womit dort auch nur sehr kleine Schwingungsamplituden auftreten. Dies reduziert zum einen den Einfluss der Lagerung über die Federelemente 41, 42 auf das Schwingverhalten des Schwingelements 17 und zum anderen kann hierdurch eine Schwingungseinkopplung in die Haltevorrichtung 26 deutlich reduziert werden. Die Federelemente 41, 42 können bereits in einem vorbereiteten Arbeitsschritt an dem Schwingelement 17 angeordnet werden, bevor dieses in die Haltevorrichtung 26 eingesetzt wird. Beispielsweise kann das Schwingelement 17 in den gezeigten Bereichen mit einem Elastomer oder einer Klebeschicht versehen werden. Dies vereinfacht zum einen den Zusammenbau der Messeinrichtung. Zum anderen wird hierdurch eine Sollausrichtung des Schwingelements 17 beim Einbau in die Haltevorrichtung 26 eindeutig erkennbar, wodurch beispielsweise ein Einbau mit falscher Polarität vermieden werden kann.

Die in Fig. 5 gezeigte Anordnung der Elektroden 33, 35 und Federelemente 41, 42 kann auch dann vorteilhaft sein, wenn die Elektroden 33, 35 nicht über die Federelemente 41, 42 kontaktiert werden, da die vorangehend beschriebenen Vorteile der Anordnung der Federelemente 41, 42 in den Randbereichen 43, 44 weiterhin gelten.

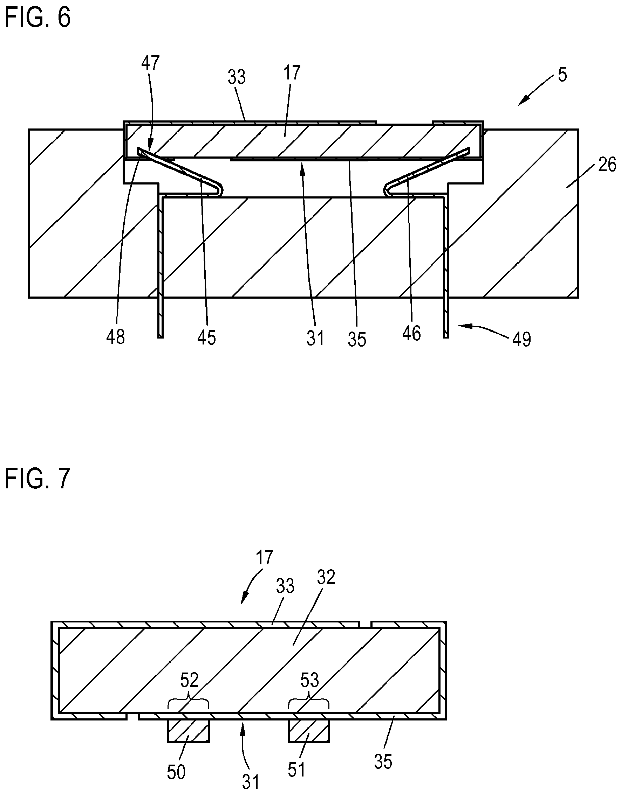

Die in Fig. 6 dargestellte Lagerung des Schwingelements 17 durch die Federelemente 45, 46 entspricht weitgehend der in Fig. 5 dargestellten Lagerung, wobei statt Blöcken elastischen Materials als Federelemente 45, 46 Blechfedern genutzt werden. Diese können beispielsweise in die Haltevorrichtung 26 eingegossen sein oder in einem vorangehenden Arbeitsschritt in diese eingesteckt werden. Die Nutzung solcher Federelemente 45, 46 ermöglicht eine besonders einfache Kontaktierung, da beispielsweise an einem aus der Haltevorrichtung 26 herausgeführten Ende 49 des Blechs eine einfache Kontaktierung möglich ist. Die Federelemente 45, 46 weisen jeweils eine Ausnehmung 47 auf, die beispielsweise in die entsprechenden Bleche eingestanzt sein kann. Dies führt dazu, dass Stützabschnitte 48, die sich über einen Auflageabschnitt der Federelemente 45, 46, der an der messrohrabgewandten Seitenfläche 31 anliegt, hinaus erstrecken, Anschlagabschnitte bilden, wie sie bereits mit Bezug auf Fig. 4 erläutert wurden. Hierdurch wird durch die Federelemente 45, 46 auch die Position des Schwingelements 17 senkrecht zur Bildebene festgelegt.

Fig. 7 zeigt eine weitere Möglichkeit zur gefederten Lagerung des Schwingelements 17. Federelemente 50, 51 können hierbei beispielsweise wieder aus Blöcken aus einem elastischen Material, beispielsweise Gummi oder einem anderen Elastomer, gebildet sein und optional auch leitfähig sein, um die Elektrode 35 zu kontaktieren. Die Federelemente 50, 51 kontaktieren die messrohrabgewandte Seitenfläche 31 des Schwingelements 17 in zwei beabstandeten Kontaktbereichen 52, 53, die, wie bereits zur Fig. 4 erläutert wurde, jeweils in Bereichen eines Schwingungsknotens eine Eigenschwingung des Schwingelements 17 angeordnet sind.

### Bezugszeichenliste

- 1: Messeinrichtung
- 2: Steuereinrichtung
- 3: Messrohr
- 4: Innenraum
- 5: Schwingungswandler
- 6: Schwingungswandler
- 7: Pfeil
- 8: Ultraschallstrahl
- 9: Seitenwand
- 10: Dicke
- 11: Pfeil
- 12: Seitenwand
- 13: Pfeil
- 14: Rayleigh-Winkel
- 15: Schwingungswandler
- 16: Kopplungselement
- 17: Schwingelement
- 18: Schwingelement
- 19: Seitenfläche
- 20: Seitenfläche
- 21: Anregungsbereich
- 22: Anregungsbereich
- 23: Abstand
- 24: Mitte
- 25: Mitte
- 26: Haltevorrichtung
- 27: Ausnehmung
- 28: Ausnehmung
- 29: Verbindungslinie
- 30: Federelement
- 31: messrohrabgewandte Seitenfläche
- 32: Schwingkörper
- 33: Elektrode
- 34: Seitenfläche
- 35: Elektrode
- 36: Seitenfläche
- 37: Federelement
- 38: Anschlagabschnitt
- 39: Seitenfläche
- 40: Erhebung
- 41: Federelement
- 42: Federelement
- 43: Randbereich
- 44: Radbereich
- 45: Federelement
- 46: Federelement
- 47: Ausnehmung
- 48: Stützabschnitt
- 49: Ende
- 50: Federelement
- 51: Federelement
- 52: Kontaktbereich
- 53: Kontaktbereich

## Patentansprüche

1. Messeinrichtung zur Ermittlung einer ein Fluid und/oder eine Fluidströmung des Fluids betreffenden Fluidgröße mit einer Steuereinrichtung (2), einem Messrohr (3), das dazu dient, das Fluid aufzunehmen und/oder zu führen, und einem an dem Messrohr (3) angeordneten, ersten Schwingungswandler (5), **dadurch gekennzeichnet, dass** der erste Schwingungswandler (5) eine ortsfest bezüglich des Messrohrs angeordnete Haltevorrichtung (26) und wenigstens zwei voneinander beabstandete Schwingelemente (17, 18) umfasst, wobei zwischen eine jeweilige von dem Messrohr (3) abgewandte Seitenfläche (31) der Schwingelemente (17, 18) und die Haltevorrichtung (26) wenigstens ein oder wenigstens ein jeweiliges elastisch verformtes Federelement (30, 37, 41, 42, 45, 46, 50, 51) geklemmt ist, welches das jeweilige Schwingelement (17, 18) gegen das Messrohr (3) oder ein zwischen dem Messrohr (3) und dem jeweiligen Schwingelement (17, 18) angeordnetes Kopplungselement (16) presst, wobei die Steuereinrichtung (2) dazu eingerichtet ist, die Schwingelemente (17, 18) derart anzusteuern, dass sie gemeinsam eine in einer Seitenwand (9) des Messrohrs (3) geführte Welle anregen, die direkt in der Seitenwand (9) oder indirekt über das Fluid zu einem an dem Messrohr (3) angeordneten zweiten Schwingungswandler (6) oder zurück zu dem ersten Schwingungswandler (5) führbar ist, um dort durch die Steuereinrichtung (2) zur Ermittlung von Messdaten erfasst zu werden, wobei die Steuereinrichtung dazu eingerichtet ist, die Fluidgröße in Abhängigkeit der Messdaten zu ermitteln.

2. Messeinrichtung nach Anspruch 1, **dadurch gekennzeichnet, dass** wenigstens eines der Schwingelemente (17, 18) einen Schwingkörper (32), eine messrohrseitige Elektrode (33), die an einer messrohrseitigen Seitenfläche (19) des jeweiligen Schwingkörpers (32) angeordnet ist, und eine messrohrabgewandte Elektrode (35), die an einer der messrohrseitigen Seitenfläche (19) gegenüberliegenden, messrohrabgewandten Seitenfläche (31) des Schwingkörpers (32) angeordnet ist, umfasst, wobei sich die messrohrseitige Elektrode (33) auf eine weitere Seitenfläche (34) des Schwingkörpers (32) erstreckt, die gewinkelt zu der messrohrseitigen und der messrohrabgewandten Seitenfläche (19, 31) steht, wobei die Steuereinrichtung (2) dazu eingerichtet ist, eine Spannung zwischen der messrohrseitigen und der messrohrabgewandten Elektrode (33, 35) zu variieren, um den Schwingkörper (32) zu Schwingungen anzuregen.

3. Messeinrichtung nach Anspruch 2, **dadurch gekennzeichnet, dass** die messrohrseitige Elektrode (33) sich über die weitere Seitenfläche (34) bis auf die messrohrabgewandte Seitenfläche (31) erstreckt.

4. Messeinrichtung nach Anspruch 2 oder 3, **dadurch gekennzeichnet, dass** die messrohrabgewandte und/oder die messrohrseitige Elektrode (33, 35) durch ein jeweiliges Federelement (30, 37, 41, 42, 45, 46, 50, 51), das elektrisch leitend ist, elektrisch kontaktiert sind.

5. Messeinrichtung nach Anspruch 4, **dadurch gekennzeichnet, dass** wenigstens eines der Federelemente (30, 37, 41, 42, 45, 46, 50, 51) genau eine Elektrode (33, 35) genau eines der Schwingelemente (17, 18) elektrisch kontaktiert.

6. Messeinrichtung nach einem der Ansprüche 2 bis 5, **dadurch gekennzeichnet, dass** der Schwingkörper (32) quaderförmig ist, wobei die messrohrseitige und die messrohrabgewandte Seitenfläche (19, 31) durch eine Längsrichtung und eine Querrichtung des Quaders aufgespannt werden, wobei der Schwingkörper (32) in Querrichtung an einem ersten Rand einen ersten Randbereich (43) und an einem gegenüberliegenden zweiten Rand einen zweiten Randbereich (44) aufweist, wobei in dem ersten Randbereich (43) sowohl an der messrohrseitigen Seitenfläche (19) als auch an der messrohrabgewandten Seitenfläche (31) ausschließlich die messrohrseitige Elektrode (33) angeordnet ist und in dem zweiten Randbereich (44) sowohl an der messrohrseitigen Seitenfläche (19) als auch an der messrohrabgewandten Seitenfläche (31) ausschließlich die messrohrabgewandte Elektrode (35) angeordnet ist, wobei in dem ersten und zweiten Randbereich (43, 44) ein jeweiliges Federelement (30, 37, 41, 42, 45, 46, 50, 51) die von dem Messrohr (3) abgewandte Seitenfläche (31) der Schwingelemente (17, 18) mechanisch kontaktiert.

7. Messeinrichtung nach einem der Ansprüche 1 bis 5, **dadurch gekennzeichnet, dass** ein oder ein jeweiliges Federelement (30, 37, 41, 42, 45, 46, 50, 51) die von dem Messrohr (3) abgewandte Seitenfläche (31) des jeweiligen Schwingelements (17, 18) in mehreren beabstandeten Kontaktbereichen (52, 53) kontaktiert, wobei die Kontaktbereiche (52, 53) jeweils im Bereich eines Schwingungsknotens einer Eigenschwingung des jeweiligen Schwingelements (17, 18) angeordnet sind.

8. Messeinrichtung nach einem der vorangehenden Ansprüche, **dadurch gekennzeichnet, dass** das Federelement (30, 37, 41, 42, 45, 46, 50, 51) oder wenigstens eines der Federelemente (30, 37, 41, 42, 45, 46, 50, 51) und/oder die Haltevorrichtung (26) wenigstens einen Anschlagabschnitt (38) aufweisen, der eines der Schwingelemente (17, 18) an wenigstens einer Seitenfläche (39) des Schwingelements (17, 18), die gewinkelt zu der von dem Messrohr (3) abgewandten Seitenfläche (31) steht, mechanisch kontaktiert und/oder der eine Bewegung des Schwingelements (17, 18) senkrecht zu dieser Seitenfläche (39) zumindest einseitig begrenzt.

9. Messeinrichtung nach Anspruch 8, **dadurch gekennzeichnet, dass** das Federelement (30, 37, 41, 42, 45, 46, 50, 51) oder wenigstens eines der Federelemente (30, 37, 41, 42, 45, 46, 50, 51) eine Ausnehmung (47) aufweist, in die eines der Schwingelemente (17, 18) derart eingelegt ist, dass ein Auflageabschnitt des Federelements (30, 37, 41, 42, 45, 46, 50, 51) an der von dem Messrohr (3) abgewandten Seitenfläche (31) des Schwingelements (17, 18) anliegt und dass wenigstens ein Stützabschnitt (48), der sich in Richtung zum Messrohr (3) hin über den Auflageabschnitt hinauserstreckt, den Anschlagabschnitt (38) ausbildet.

10. Messeinrichtung nach einem der vorangehenden Ansprüche, **dadurch gekennzeichnet, dass** das Federelement (30, 37, 41, 42, 45, 46, 50, 51) durch ein Polymer oder ein Elastomer oder ein Metall gebildet ist oder eine Klebstoffschicht ist oder umfasst.

11. Messeinrichtung nach einem der vorangehenden Ansprüche, **dadurch gekennzeichnet, dass** der erste Schwingungswandler (5) eine Schwingmembran oder eine Schwingplatte als Kopplungselement (16) aufweist, die an der Haltevorrichtung (26) befestigt ist und direkt oder über eine Kopplungsschicht mit dem Messrohr (3) gekoppelt ist, wobei an der von dem Messrohr (3) abgewandten Oberfläche der Schwingmembran oder der Schwingplatte in voneinander beabstandeten Anregungsbereichen (21, 22) ein jeweiliges Schwingelement (17, 18) angeordnet ist, wobei die Schwingelemente (17, 18) gemeinsam durch das oder das jeweilige Federelement (30, 37, 41, 42, 45, 46, 50, 51) und die Schwingmembran oder die Schwingplatte gehaltert sind.
